# EUROPEAN PATENT SPECIFICATION

(11) **EP 0 986 430 B1**
(45) Date of publication and mention of the grant of the patent: **24.03.2004**
(21) Application number: 98924683.0
(22) Date of filing: 29.05.1998
(51) Int. Cl.: B01D 46/30

(54) **METHOD AND DEVICE FOR PURIFICATION OF GAS**
VERFAHREN UND VORRICHTUNG ZUR REINIGUNG VON GAS
PROCEDE ET DISPOSITIF SERVANT A PURIFIER DU GAZ

(30) Priority: 02.06.1997 NO 972501
(43) Date of publication of application: 22.03.2000
(73) Proprietor: Nyfotek A/S, 7034 Trondheim (NO)
(72) Inventor: NOS, Per, O., N-1370 Asker (NO); SÖNJU, Otto, K., N-7018 Trondheim (NO)
(74) Representative: Dealtry, Brian
(86) International application number: PCT/NO1998/000161
(87) International publication number: WO 1998/055203

(56) References cited:
- US-A- 4 004 897
- US-A- 4 300 921
- US-A- 4 482 358
- US-A- 4 601 736

## Description

The present invention concerns a method and an apparatus for circulation of sand in a sand filter for cleaning of gases according to the introductory part of Claim 1 and Claim 4, respectively.

Several techniques for removal of particles from smoke gases are known, e.g. cyclones, bag filters and electrostatic filters.

A concept known from e.g. US patent No. 4,004,897, called Panel Bed Filter or sand filter, is an alternative to the more conventional methods for particle removal. Shortly explained, the concept is based on the utilisation of sand and other granulated material for the filter medium. This means that the filter can withstand high temperatures and that unburned material and glowing particles that are often included in the gas, do not constitute any problem.

The cleaning of the gas takes place by leading the gas towards a sand module with deposition of the particles on the surface of the sand module in the form of a filter cake. When the filter cake has reached a thickness corresponding to a limit value of resistance across the filter, the filter is cleaned by pausing the circulation of gas and ejecting a short pressure pulse in the opposite direction through the filter. The filter cake is thereby blown off together with some amounts of sand. This mixture is transported to a separator where sand is separated from the dust and returned to the filter module. Thus, the sand is circulated in a closed loop. A disadvantage with this known circulation loop for sand filters is that there is no control of the amount of sand in the loop, and there is consequently no possibility of performing a controlled refill or removal should the sand level become to low, respectively to high.

There is an object with the present invention to provide a method and an apparatus of the kind mentioned above, in which it is easy to maintain control of the amount of sand in the system, and with means for performing a controlled adjustment of the sand level.

This object is reached with a method and an apparatus with features as described in the characterising part of Claim 1 and Claim 4, respectively. Further features are disclosed in the dependent claims.

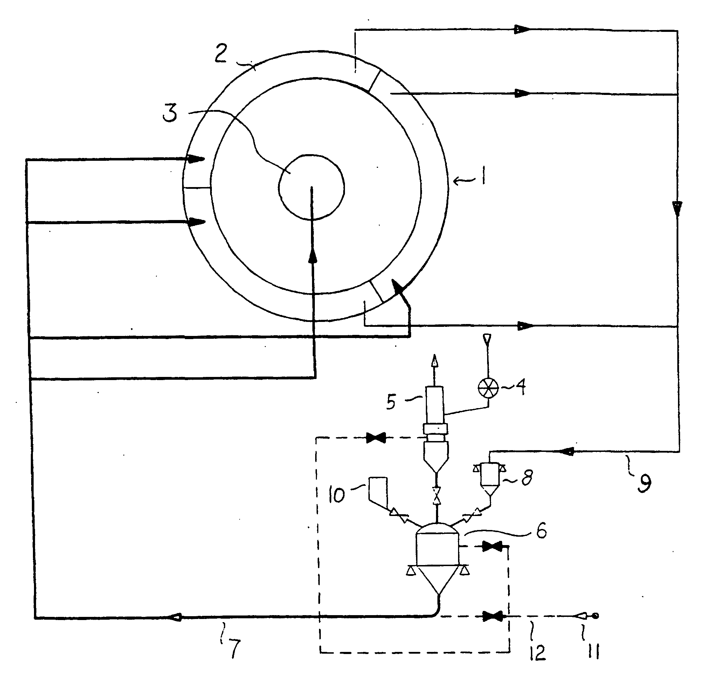

In the following, the invention shall be explained in further detail with reference to an example of an embodiment of the invention as disclosed by the enclosed drawing, providing a schematic view of a circulation loop for sand according to the invention.

The drawing shows a filter housing 1 equipped with a number of filter modules (not shown). The filter modules are in a preferred embodiment arranged in two concentrical circles within the filter housing 1 in such a way that addition of sand can be performed by forces of gravity from adjacent sand silos 2, 3. A number of silos 2 are placed around the periphery of the filter housing 1, and a silo 3 is placed in the centre of filter housing 1.

The filter modules have a bottom cone (not shown) which captures sand and dust that are blown off from the filter housing. This material is led by a rotary valve 4 to a separator 5 where sand and dust are separated. The dust is removed by a dust discharge, whereas the sand falls down into a sand conveyor 6. The sand conveyor 6 pneumatically transports the sand back to the sand silos 2, 3 by a sand loop 7 when the sand conveyor 6 is full.

A sand return tank 8 is arranged to collect the sand from the sand silos 2, 3, when these are full. Transport of sand from the silos 2, 3 to the sand return tank takes place by a sand return loop 9. A sand filling reservoir 10 is arranged to add further sand to the sand conveyor 6 when necessary. A pressure air supply 11 gives high pressure air to by a air pressure loop 12 to the separator 5, the sand conveyor 6 and the sand loop 7.

The sand return tank 8 and the sand conveyor 6 are equipped with weighing cells, so that it is possible at any time to keep control with how much sand the sand silos 2, 3 can receive. The weighing cells are connected to a calculating unit (not shown) for handling of input data and controlling of the total sand loop.

When the silos 2, 3 are full the sand will be passed into an overflow outlet. When the sand conveyor has completed the transportation of a weighted amount of sand, the weight of the sand in the sand return tank are registered before it is dropped into the sand conveyor again. The process of discharging sand and dust from the filter continues until there is nothing more left in the bottom cone. By registering the sand flow in the total loop, it is possible to determine whether the sand volume in the system is increasing or decreasing, thus enabling refilling or draining of sand, accordingly.

The invention is described herein with reference to a circular filter housing, but it is evident that other geometrical shapes, such as rectangular shapes will fall within the scope of the invention.

## Claims

1. Method for circulation of sand for a sand filter for cleaning of gases, in which a number of filter modules arranged in a filter housing (1) is supplied with sand from a number of sand silos (2, 3), and sand and dust being blown off the filter modules down into a bottom cone in the filter housing (1) and subsequently led by a rotary valve to a separator (5) where sand is separated from dust and the sand falls down into a sand conveyor (6) which transports the sand back to the sand silos (2, 3) in a sand loop (7) when the sand conveyor (6) is full,
**characterised in** comprising the following steps:
a) weighing of the sand in the sand conveyor (6) before it is led by the sand loop (7) to the silos (2, 3),
b) repeating step a) until the bottom cone is empty,
c) calculating net sand flow in the loop and refill sand to - or drain sand from the sand silos (2, 3).

2. Method according to claim 1,
**characterised in that** sand that are drained according to step c) are supplied to a sand return tank (8) by a sand return loop (9) where the sand is weighted before it is dropped into the sand conveyor (6) as and when required.

3. Method according to claims 1-2,
**characterised in that** sand to be refilled according to step c) is picked up from a sand filling reservoir (10).

4. Apparatus for circulation of sand for a sand filter for cleaning of gases according to claims 1-3, in which a number of filter modules is arranged in a filter housing (1) for being supplied with sand from a number of sand silos (2, 3), where a bottom cone is arranged in the filter housing for temporarily keeping sand and dust being blown off the filter modules and where a rotary valve (4) is arranged to feed sand and dust to a separator (5) where sand and dust are separated, where after the sand falls into a sand conveyor (6) which through a sand loop (7) transports the sand back to the sand silos (2, 3) when the sand conveyor (6) is full,
**characterised in that** the sand conveyor (6) is equipped with a weighing cell provided to weigh the sand before it is led by the sand loop (7) to the silos (2, 3).

5. Apparatus according to claim 4,
**characterised in that** it further comprises a sand return tank (8) connected to the sand silos (2, 3) by means of a sand return loop (9) and to the sand conveyor (6), the sand return tank (8) being equipped with a weighing cell provided to weigh the sand before it is dropped into the sand conveyor (6) as and when required.

6. Apparatus according to claim 4-5,
**characterised in that** a sand filling reservoir (10) is provided for supplying sand to the sand conveyor (6).

## Patentansprüche

1. Verfahren zum Zirkulieren von Sand für ein Sandfilter zum Reinigen von Gasen, in dem eine Anzahl von in einem Filtergehäuse (1) angeordneten Filtermodulen mit Sand von einer Anzahl von Sandsilos (2,3) versorgt wird, und wobei Sand und Staub von den Filtermodulen weg in einen Bodentrichter in dem Filtergehäuse (1) abgeblasen und anschließend durch ein Drehventil zu einer Trenneinrichtung bzw. einem Separator (5) geleitet werden, wo Sand von Staub getrennt wird und der Sand in eine Sandfördereinrichtung (6) herabfällt, welche den Sand in einer Sandschleife (7) zu den Sandsilos (2,3) zurücktransportiert, wenn die Sandfördereinrichtung (6) voll ist,
**dadurch gekennzeichnet, dass** es die folgenden Schritte umfasst:
a) Wiegen des Sandes in der Sandfördereinrichtung (6), bevor er über die Sandschleife (7) den Silos (2,3) zugeführt wird,
b) Wiederholen des Schrittes a), bis der Bodentrichter leer ist,
c) Berechnen des Netto-Sandstroms in der Schleife und Nachfüllen von Sand in oder Ablassen von Sand aus den Sandsilos (2,3).

2. Verfahren nach Anspruch 1, **dadurch gekennzeichnet, dass** Sand, der gemäß Schritt c) abgelassen wird, einem Sandrückführbehälter (8) über eine Sandrückführschleife (9) zugeführt wird, wo der Sand, sofern und wann es erforderlich ist, gewogen wird, bevor er in die Sandfördereinrichtung (6) fallengelassen wird.

3. Verfahren nach den Ansprüchen 1 - 2, **dadurch gekennzeichnet, dass** gemäß Schritt c) nachzufüllender Sand von einem Sandauffüllreservoir (10) aufgenommen wird.

4. Vorrichtung zum Zirkulieren von Sand für ein Sandfilter zum Reinigen von Gasen gemäß den Ansprüchen 1 bis 3, in dem eine Anzahl von Filtermodulen in einem Filtergehäuse (1) angeordnet ist, um mit Sand von einer Anzahl Sandsilos (2,3) versorgt zu werden, wobei ein Bodentrichter in dem Filtergehäuse zum vorübergehenden Halten von von den Filtermodulen abblasenem Sand und Staub angeordnet ist, und wobei ein Drehventil (4) so angeordnet ist, dass es Sand und Staub einer Trennvorrichtung bzw. einem Separator (5) zuführt, wo Sand und Staub getrennt werden und wo der Sand in eine Sandfördereinrichtung (6) fällt, die über eine Sandschleife (7) den Sand zurück zu den Sandsilos (2,3) transportiert, wenn die Sandfördereinrichtung (6) voll ist,
**dadurch gekennzeichnet, dass** die Sandfördereinrichtung (6) mit einer Wiegezelle ausgestattet ist, die dazu vorgesehen ist, den Sand zu wiegen, bevor er über die Sandschleife (7) den Silos (2,3) zugeführt wird.

5. Vorrichtung nach Anspruch 4, **dadurch gekennzeichnet, dass** sie ferner einen Sandrückführbehälter (8) umfasst, der mit den Sandsilos (2,3) über eine Sandrückführschleife (9) und mit der Sandfördereinrichtung (6) verbunden ist, wobei der mit einer Wiegezelle ausgestattete Sandrückführbehälter (8) dazu vorgesehen ist, den Sand zu wiegen, bevor er in die Sandfördereinrichtung (6) fallengelassen wird, sofern und wann es erforderlich ist.

6. Vorrichtung nach Anspruch 4 - 5, **dadurch gekennzeichnet, dass** ein Sandauffüllreservoir (10) zum Zuführen von Sand zu der Sandfördereinrichtung (6) vorgesehen ist.

## Revendications

1. Procédé pour la circulation de sable pour un filtre à sable pour le nettoyage des gaz, dans lequel un certain nombre de modules de filtre agencés dans un logement de filtre (1) est alimenté avec du sable à partir d'un certain nombre de silos de sable (2, 3), et du sable et de la poussière étant expulsés des modules de filtre vers le bas dans un cône de fond situé dans le logement de filtre (1) et successivement conduits par une vanne rotative vers un séparateur (5) dans lequel le sable est séparé de la poussière et le sable tombe dans un convoyeur de sable (6) qui transporte le sable en arrière vers les silos de sable (2, 3) dans une boucle de sable (7) lorsque le convoyeur de sable (6) est plein,
**caractérisé en ce qu'**il comprend les étapes suivantes consistant à :
a) peser le sable situé dans le convoyeur de sable (6) avant qu'il soit conduit par la boucle de sable (7) vers les silos (2, 3),
b) répéter l'étape a) jusqu'à ce que le cône de fond soit vide,
c) calculer l'écoulement de sable net dans la boucle et réapprovisionner le sable - ou évacuer le sable des silos de sable (2, 3).

2. Procédé selon la revendication 1, **caractérisé en ce que** le sable qui est évacué selon l'étape c) est alimenté dans un réservoir de retour de sable (8) par une boucle de retour de sable (9) où le sable est pesé avant de tomber dans le convoyeur de sable (6) si nécessaire et lorsque cela est nécessaire.

3. Procédé selon les revendications 1 - 2, **caractérisé en ce que** le sable qui doit être réapprovisionné selon l'étape c) est prélevé à partir d'un réservoir de remplissage de sable (10).

4. Dispositif pour la circulation de sable pour un filtre à sable pour le nettoyage des gaz, selon les revendications 1 - 3, dans lequel un certain nombre de modules de filtre est agencé dans un logement de filtre (1) pour être alimenté avec du sable à partir d'un certain nombre de silos de sable (2, 3), où un cône de fond est agencé dans le logement de filtre pour garder temporairement le sable et la poussière qui sont expulsés des modules de filtre et dans lequel une vanne rotative (4) est agencée pour alimenter le sable et la poussière dans un séparateur (5) dans lequel le sable et la poussière sont séparés, dans lequel après que le sable soit tombé dans un convoyeur de sable (6) qui, par le biais d'une boucle de sable (7) transporte le sable en arrière vers les silos de sable (2, 3) lorsque le convoyeur de sable (6) est plein,
**caractérisé en ce que** le convoyeur de sable (6) est équipé avec une cellule de pesée prévue pour peser le sable avant qu'il soit conduit par la boucle de sable (7) dans les silos (2, 3).

5. Dispositif selon la revendication 4, **caractérisé en ce qu'**il comprend en outre un réservoir de retour de sable (8) raccordé aux silos de sable (2, 3) au moyen d'une boucle de retour de sable (9) et au convoyeur de sable (6), le réservoir de retour de sable (8) étant équipé avec une cellule de pesée prévue pour peser le sable avant qu'il tombe dans le convoyeur de sable (6) si nécessaire, et lorsque cela est nécessaire.

6. Dispositif selon la revendication 4 - 5, **caractérisé en ce qu'**un réservoir de remplissage de sable (10) est prévu pour alimenter du sable au convoyeur de sable (6).
